# EUROPÄISCHE PATENTSCHRIFT

(11) **EP 2 391 874 B1**
(45) Veröffentlichungstag und Bekanntmachung des Hinweises auf die Patenterteilung: **11.12.2019**
(21) Anmeldenummer: 10702036.4
(22) Anmeldetag: 21.01.2010
(51) Int. Cl.: G01G 19/08, G01G 23/00

(54) **FLURFÖRDERZEUG**
INDUSTRIAL TRUCK
CHARIOT DE MANUTENTION

(30) Priorität: 27.01.2009 DE 102009006329
(43) Veröffentlichungstag der Anmeldung: 07.12.2011
(73) Patentinhaber: Soehnle Industrial Solutions GmbH, 71522 Backnang (DE); Linde Material Handling GmbH, 63743 Aschaffenburg (DE)
(72) Erfinder: GERSTER, Stephan, 53343 Wachtberg-Pech (DE); SCHURR, Michael, 71540 Murrhardt (DE); KRETSCHMER, Steffen, F-86530 Cenon sur Vienne (FR)
(74) Vertreter: Hoffmann, Jürgen
(86) Internationale Anmeldenummer: PCT/EP2010/000335
(87) Internationale Veröffentlichungsnummer: WO 2010/086112

(56) Entgegenhaltungen:
- EP-A2- 0 438 660
- WO-A1-03/060440
- DE-A1- 3 802 502
- JP-A- 2000 044 196
- US-A1- 2004 140 136

## Beschreibung

Die Erfindung betrifft ein Flurförderzeug, das als Gabelhubwagen und/oder als Handhubwagen und/oder als Palettenhubwagen ausgebildet ist und das eine Ladefläche aufweist, die mittels einer Hubvorrichtung anhebbar ist, wobei die Hubvorrichtung zumindest zwei miteinander mittels einer Achse drehgelenkig verbundene Hebebauteile aufweist.

Aus DE 199 10 285 A1 ist ein Gabelhubwagen mit einer Wiegevorrichtung bekannt. Die Wiegevorrichtung weist mehrere als hydraulische Druckaufnehmer ausgebildete Kraftsensoren auf.

Aus DE 10 2006 028 551 A1 ist ein Gabelstapler bekannt, bei dem in ein Fahrwerksbauteil, nämlich die Pendelaufhängung der Hinterachse, ein Kraftaufnehmer integriert ist. Ebenso offenbart DE 38 02 502 A1 einen Gabelhubwaagen mit Kraftaufnehmern im Fahrwerk. Diese Vorrichtungen haben den Nachteil, dass die Messung verfälschende Querkräfte auf die Kraftaufnehmer einwirken, beispielsweise wenn der Untergrund uneben ist.

Aus DE 34 36 552 A1 ist ein Hubwagen für den Palettentransport bekannt, der mit an Hebeln angeordneten Rollen ausgerüstet ist. Die, die Hebel verschwenkenden Kraftübertragungsgestänge sind mit mehreren Wägemesseinrichtungen ausgerüstet. Dieser Aufbau ist konstruktiv aufwändig.

DE 38 02 502 A1 offenbart eine Wiegevorrichtung für einen Gabelhubwagen, bei dem die Last direkt nach Anheben an einem Anzeigegerät abzulesen ist. Zu diesem Zweck ist der Gabelhubwagen mit drei Meßachsen ausgerüstet. Bei einem Handgabelhubwagen wird der dritte Meßbolzen in die Achse der vorderen Lenkräder eingebaut, während bei einem angetriebenen Gabelhubwagen der dritte Meßbolzen in die Kolbenhubachse eines Zylinders integriert ist. Das Meßsignal wird über ein Kabel an ein Verstärkergerät übertragen und an einem Anzeigegerät dargestellt.

US 2004/0140136A1 offenbart einen "hand truck" mit zwei Fußteilen, wobei in jedem Fußteil ein Gewichtssensor angeordnet ist.

Es ist die Aufgabe der vorliegenden Erfindung, ein Flurförderzeug, anzugeben, das es auf konstruktiv einfache Weise ermöglicht, das Gewicht der zu hebenden Last zuverlässig zu ermitteln.

Die Aufgabe wird durch ein Flurförderzeug gelöst, das dadurch gekennzeichnet ist, dass die Achse zusätzlich zu ihrer Funktion als Lagerbauteil als Kraftmesselement ausgebildet ist, wobei das Flurförderzeug die Achse als einziges Kraftmesselement aufweist oder wobei das Flurförderzeug mehrere Kraftmesselemente aufweist, die an demselben Hebebauteil angeordnet sind und die die einzigen Kraftmesselemente des Flurförderzeugs sind.

Die Erfindung hat den Vorteil, dass ein Bauteil, das ohnehin benötigt wird, nämlich eine Achse, gleichzeitig die Aufgaben der Kraftmessung übernimmt, so dass kein zusätzlicher Bauraum zur Realisierung der Wiegefunktion benötigt wird. Darüber hinaus ist in vorteilhafter Weise die Zahl der zusätzlich erforderlichen Bauteile äußerst klein und beschränkt sich im Wesentlichen auf Elektronikbauteile zur Auswertung der von der Achse ausgehenden Messsignale. Die Hubvorrichtung ist daher äußerst kompakt herstellbar. Außerdem kann eine bestehende Hubvorrichtung einfach und unkompliziert zu einer Hubvorrichtung für ein erfindungsgemäßes Flurförderzeug umgebaut werden.

Bei einer besonderen Ausführungsform ist zumindest eines der Hebebauteile Teil einer Parallelogrammführung oder einer Dreiecksführung. Es kann in vorteilhafter Weise auch vorgesehen sein, dass zumindest eines der Hebebauteile Teil einer Scherenhubvorrichtung oder einer Parallelogrammhubvorrichtung und/oder einer Mehrgelenkhubvorrichtung ist.

Bei einer ganz besonders robusten und störunanfälligen Ausführungsform weist die Hubvorrichtung eine - vorzugsweise motorisch angetriebene - Gewindespindel mit einer Spindelmutter auf. Durch Drehung der Gewindespindel wird eine translatorische Bewegung der Spindelmutter bewirkt, wobei die Spindelmutter in vorteilhafter Weise gleichzeitig eines der Hebebauteile sein kann, die durch die Achse drehgelenkig mit einem anderen Hebebauteil, beispielsweise einem Hubarm oder mehreren Hubarmen, verbunden ist. Diese Ausführungsform hat insbesondere den Vorteil, dass keine zusätzliche Bauhöhe - etwa für eine zusätzlich an oder unter der Gewindespindel angeordnete Kraftmessvorrichtung - benötigt wird.

Als Antriebsvorrichtung kann alternativ oder zusätzlich zur Gewindespindel mit Spindelmutter auch ein Hydraulikzylinder vorgesehen sein. Auch andere Antriebsvorrichtungen, wie beispielsweise Getriebemotoren, oder auch manuell zu betreibende Antriebsvorrichtungen sind prinzipiell einsetzbar.

Bei einer besonders gut an die mechanischen Anforderungen anpassbaren Ausführung ist die Achse im Wesentlichen zylindrisch ausgebildet. Es kann jedoch auch vorgesehen sein, dass lediglich der Teil der Achse zylindrisch ausgebildet ist, das - direkt oder indirekt - der Drehlagerung eines Hebebauteils dient.

Bei einer einfach herstellbaren Ausführung ist die Achse als Biegekraftaufnehmer ausgebildet. Hierbei kann beispielsweise vorgesehen sein, dass die Achse einen Messabschnitt, beispielsweise mit einer Querbohrung oder einer Querausnehmung, aufweist, in deren Bereich ein - vorzugsweise mehrere - Dehnungsmessstreifen befestigt sind. Alternativ oder zusätzlich kann auch vorgesehen sein, dass die Achse als kapazitiv messender und/oder induktiv messender Kraftaufnehmer ausgebildet ist.

Bei einer Ausführungsform, die die empfindlicheren Messbauteile der Achse besonders gut schützt, weist die Achse zumindest ein zylindrisches Gehäuse auf, in dem ein mit Messsensoren ausgerüsteter Messkörper, wie beispielsweise ein Biegebalken, angeordnet ist.

Bei einer besonders robusten und störunanfälligen Ausführung weist die Achse eine Überlastbegrenzung auf. Beispielsweise kann die Überlastbegrenzung durch das zylindrische Gehäuse realisiert sein, das derart angeordnet ist, dass endseitig zwischen dem Messkörper und dem Gehäuse ein Ringspalt von beispielsweise einigen zehntel Millimeter verbleibt, der die Biegbarkeit des Messkörpers mechanisch begrenzt. Um - falls gewünscht - eine in alle Biegerichtungen gleichen maximalen Biegeweg zu erreichen, ist das zylindrische Gehäuse bei einer besonderen, symmetrischen Ausführung konzentrisch zum Messkörper angeordnet.

Bei einer besonders gut gekapselten Ausführungsform ist eines der Hebebauteile an dem Gehäuse und ein anderes der Hebebauteile an dem Messkörper angeordnet.

Die erfindungsgemäße Hubvorrichtung kann vorteilhafter Weise derart ausgebildet sein, dass lediglich eine einzige Achse nötig ist, die zusätzlich zu ihrer Funktion als Lagerbauteil als Kraftmesselement ausgebildet ist, um ein um eine präzise und vollständige Kraft bzw. Gewichtsmessung zu ermöglichen. Hierzu ist das einzige Kraftmesselement vorzugsweise an mechanisch derart einer zentralen Stelle der Hubvorrichtung angeordnet, an der sich sämtliche Kraft- bzw. Gewichtsbelastungen auswirken.

Es kann zur Erzielung einer präzisen Messung bei einfachem und zuverlässigen Aufbau statt einer einzigen Kraftmessvorrichtung vorteilhaft auch vorgesehen sein, dass sämtliche Achsen, die zusätzlich als Kraftmesselemente ausgebildet sind, an demselben Hebebauteil angeordnet sind und/oder der drehbaren Lagerung desselben Hebebauteils dienen.

Besonders vorteilhaft ist ein erfindungsgemäßes Flurförderzeug, das als Gabelhubwagen und/oder Handhubwagen und/oder Palettenhubwagen ausgebildet ist. Insbesondere kann in erfindungsgemäßer Weise darauf verzichtet werden, jedes der Räder oder jede Fahrwerksachse mit Kraftmesselementen auszurüsten, so dass das erfindungsgemäße Flurförderzeug mit dem einzigen Kraftmesselement der Hubvorrichtung oder mit den mehreren - jedoch an demselben Hebebauteil angeordneten - Kraftmesselementen der Hubvorrichtung eine ausreichend genaue Messung des Gewichts der anzuhebenden bzw. angehobenen Last ermöglicht.

Ein besonderes, erfindungsgemäßes Flurförderzeug weist eine mit der Hubvorrichtung anhebbare Ladefläche auf. Hierbei kann vorteilhaft vorgesehen sein, dass das Gewicht einer auf der Ladefläche befindlichen Last - vorzugsweise ausschließlich - mit der Achse bzw. den Achsen der Hubvorrichtung messbar ist, die zusätzlich zu ihrer Funktion als Lagerbauteil als Kraftmesselement ausgebildet ist bzw. sind.

Bei einem bevorzugten Flurförderzeug ist die Ladefläche parallel - vorzugsweise sowohl relativ zu zumindest einem Vorderrad, also auch relativ zu zumindest einem Hinterrad - anhebbar. Die Hubvorrichtung misst hierbei das Gewicht einer auf der Ladefläche befindlichen Last weitgehend unabhängig von der Lastverteilung auf der Ladefläche bzw. erzeugt von der Lastverteilung unabhängige Messsignale.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: Ein Ausführungsbeispiel eines erfindungsgemäßen Flurförderzeugs, das als Hubwagen ausgebildet ist,
- Fig. 2: eine stirnseitige Detailansicht der Hubvorrichtung des Flurförderzeugs, und
- Fig. 3: eine Detailansicht der Hubvorrichtung des Flurförderzeugs von oben.

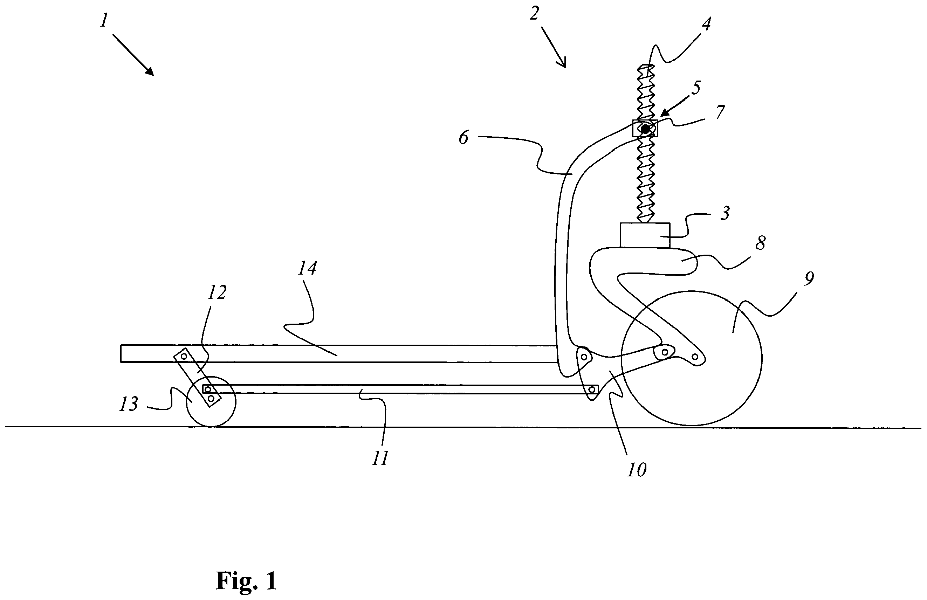

Fig. 1 zeigt ein Ausführungsbeispiel eines erfindungsgemäßen Flurförderzeugs, das als Hubwagen 1 ausgebildet ist. Der Hubwagen 1 ist mit einer Hubvorrichtung 2 ausgerüstet, die als Mehrgelenkhubvorrichtung ausgebildet ist. Die Hubvorrichtung 2 weist einen vom Benutzer steuerbaren Motor 3 auf, der eine Gewindespindel 4 drehend antreibt. Durch Drehung der Gewindespindel 4 wird eine translatorische Bewegung eines ersten Hebebauteils, nämlich einer Spindelmutter 5, bewirkt. Mit der Spindelmutter 5 ist ein zweites Hebebauteil, nämlich ein gabelförmiger Hubarm 6, drehgelenkig verbunden, wobei die Achsen 7, die die Hebebauteile drehgelenkig verbinden, zusätzlich zu ihrer Funktion als Lagerbauteil als Kraftmesselemente ausgebildet sind. Der Motor 3 ist auf einem Stützarm 8 befestigt, an dem auch die Hinterräder 9 des Hubwagens 1 drehbar gelagert sind. Der Stützarm 8 und der gabelförmige Hubarm 6 sind jeweils drehgelenkig mit einem Pendelarm 10 verbunden, mit dessen Hilfe über eine Schubstange 11 der Ausklappwinkel eines Schwenkarmes 12 automatisch gesteuert wird, an dem die Vorderräder 13 drehbar angeordnet sind. Der Hubwagen 1 weist eine gabelförmige Ladefläche 14 auf, wobei das Gewicht einer auf der Ladefläche 14 befindlichen Last durch Auswertung der von den als Kraftmesselemente ausgebildeten Achsen 7 erzeugten Messsignalen zuverlässig ermittelbar ist. Die Gewichtsmessung ist weitgehend unabhängig von der Lastverteilung auf der Ladefläche, weil auch eine hauptsächlich im Bereich der Vorderräder 13 befindliche Last ihre Gewichtskraft über den Schwenkarm 12, die Schubstange 11, den Pendelarm 10 und den Hubarm 6 auf die als Kraftmesselemente ausgebildeten Achsen 7 überträgt. Nicht dargestellt ist die Deichsel des Hubwagens 1, an der eine Signalauswerteelektronik und ein Display zur Anzeige des gemessenen Gewichtswertes angeordnet sind.

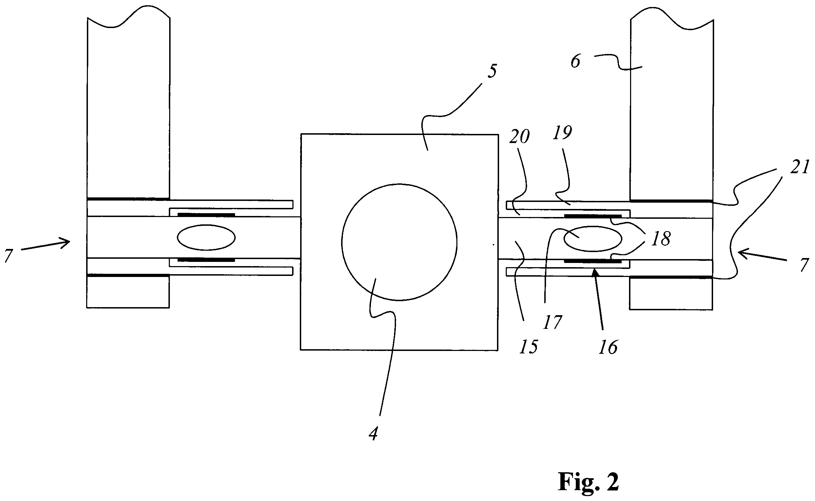

Fig. 2 zeigt eine Detailansicht der Hubvorrichtung 2 von oben, wobei insbesondere die drehgelenkige Verbindung der beiden Hebebauteile, nämlich der Spindelmutter 5 mit dem gabelförmigen Hubarm 6, sowie Details der Achsen 7 dargestellt sind, die zusätzlich zu ihrer Funktion als Lagerbauteil als Kraftmesselement ausgebildet sind. Da die beiden Achsen 7 symmetrisch an der Spindelmutter 5 angeordnet und gleichartig aufgebaut sind, wird im Folgenden lediglich auf eine der beiden Achsen 7 Bezug genommen. Die Achse 7 weist einen mit Messsensoren ausgerüsteten Messkörper 15 auf, der als Biegekraftaufnehmer ausgebildet ist. In einem Biegebereich 16 ist der Messkörper 15 mit einer durchgehenden Ausnehmung 17 versehen, wobei die an die Ausnehmung 17 angrenzenden Randbereiche des Messkörpers 15 als Biegestege dienen, die mit Dehnungsmessstreifen18 versehen sind. Zum Schutz der Messsensoren, nämlich insbesondere der Dehnungsmessstreifen18, und als Überlastbegrenzung weist die Achse 7 ein zylindrisches Gehäuse 19 auf, das koaxial zum Messkörper 15 angeordnet ist. Der Messkörper 15 ist einerseits drehfest an der Spindelmutter 5 angeordnet und andererseits drehfest mit dem zylindrischen Gehäuse 19 verbunden, jedoch in der Weise, dass zwischen dem der Spindelmutter zugewandten Ende des Messkörpers 15 und dem zylindrischen Gehäuse 19 ein Ringspalt 20 von 0,5 Millimeter verbleibt, so dass der Messkörper 15 innerhalb dieses Spiels verbiegbar ist, jedoch durch das zylindrischen Gehäuse 19 vor übermäßigem Verbiegen geschützt ist. An dem der Spindelmutter 5 angewandten Ende der Achse 7 ist zwischen dem zylindrischen Gehäuse 19 und dem Hubarm 6 ein Gleitlager 21 eingebaut, das die drehbare Lagerung gewährleistet.

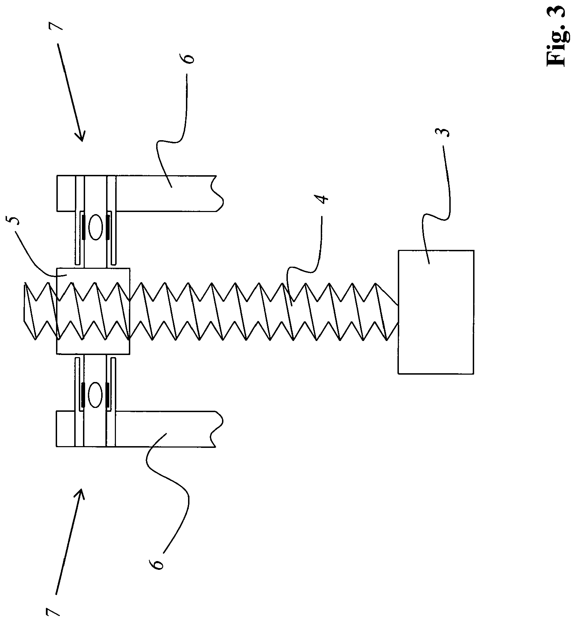

Fig. 3 zeigt eine Detailansicht der Hubvorrichtung 2 von oben. Mit dem Motor 3 wird die Gewindespindel 4 in Drehung versetzt, um die Spindelmutter 5 und damit den mit Hilfe der Achsen 7 drehbar an der Spindelmutter 5 angeordneten Hubarm 6 (gezeigt sind die Enden der gabelförmigen Seite des Hubarms 6) - je nach Drehrichtung der Gewindespindel - aufwärts oder abwärts zu bewegen.

### Bezugszeichenliste

- 1: Hubwagen
- 2: Hubvorrichtung
- 3: Motor
- 4: Gewindespindel
- 5: Spindelmutter
- 6: Hubarm
- 7: Achsen
- 8: Stützarm
- 9: Hinterräder
- 10: Pendelarm
- 11: Schubstange
- 12: Schwenkarm
- 13: Vorderräder
- 14: Ladefläche
- 15: Messkörper
- 16: Biegebereich
- 17: Ausnehmung
- 18: Dehnungsmessstreifen
- 19: zylindrisches Gehäuse
- 20: Ringspalt
- 21: Gleitlager

## Patentansprüche

1. Flurförderzeug, das als Gabelhubwagen und/oder als Handhubwagen und/oder als Palettenhubwagen ausgebildet ist und das eine Ladefläche aufweist, die mittels einer Hubvorrichtung anhebbar ist, wobei die Hubvorrichtung (2) zumindest zwei miteinander mittels einer Achse (7) drehgelenkig verbundene Hebebauteile aufweist, **dadurch gekennzeichnet, dass** die Achse (7) zusätzlich zu ihrer Funktion als Lagerbauteil als Kraftmesselement ausgebildet ist, wobei das Flurförderzeug die Achse (7) als einziges Kraftmesselement aufweist oder wobei das Flurförderzeug mehrere Kraftmesselemente aufweist, die an demselben Hebebauteil angeordnet sind und die die einzigen Kraftmesselemente des Flurförderzeugs sind.

2. Flurförderzeug nach Anspruch 1, **dadurch gekennzeichnet, dass** zumindest eines der Hebebauteile Teil
a. einer Parallelogrammführung oder einer Dreiecksführung ist und/oder
b. Teil einer Scherenhubvorrichtung oder einer Parallelogrammhubvorrichtung und/oder einer Mehrgelenkhubvorrichtung ist.

3. Flurförderzeug nach Anspruch 1 oder 2, **dadurch gekennzeichnet, dass** eine Gewindespindel (4) vorgesehen ist und/oder dass eine Gewindespindel (4) vorgesehen ist, wobei eines der Hebebauteile als Spindelmutter (5) ausgebildet ist.

4. Flurförderzeug nach einem der Ansprüche 1 bis 3, **dadurch gekennzeichnet, dass** zumindest eines der Hebebauteile als Hubarm (6) ausgebildet ist und/oder dass zumindest eines der Hebebauteile als Hubarm (6) ausgebildet ist und eines der Hebebauteile als Spindelmutter (5) ausgebildet ist, wobei die Achse den Hubarm drehgelenkig mit der Spindelmutter (5) verbindet.

5. Flurförderzeug nach einem der Ansprüche 1 bis 4, **dadurch gekennzeichnet, dass** die Hubvorrichtung (2) einen Hydraulikzylinder aufweist.

6. Flurförderzeug nach einem der Ansprüche 1 bis 5, **dadurch gekennzeichnet, dass**
a. die Achse (7) als Biegekraftaufnehmer ausgebildet ist und/oder dass an und/oder
b. in der Achse (7) zumindest ein Dehnungsmessstreifen (18) angeordnet ist und/oder dass
c. die Achse als kapazitiv messender und/oder induktiv messender Kraftaufnehmer ausgebildet ist.

7. Flurförderzeug nach einem der Ansprüche 1 bis 6, **dadurch gekennzeichnet, dass** die Achse (7) einen Überlastbegrenzung aufweist.

8. Flurförderzeug nach einem der Ansprüche 1 bis 7, **dadurch gekennzeichnet, dass** die Achse (7) zumindest ein zylindrisches Gehäuse (19) aufweist, in dem ein mit Messsensoren ausgerüsteter Messkörper (15), wie beispielsweise ein Biegebalken, angeordnet ist.

9. Flurförderzeug nach Anspruch 8, **dadurch gekennzeichnet, dass**
a. das zylindrische Gehäuse (19) derart dimensioniert und angeordnet ist, dass es als Überlastanschlag für den Messkörper (15) fungiert und/oder dass
b. das zylindrische Gehäuse (19) konzentrisch zum Messkörper angeordnet ist und/oder dass
c. eines der Hebebauteile an dem Gehäuse und ein anderes der Hebebauteile an dem Messkörper (15) angeordnet ist.

10. Flurförderzeug nach einem der Ansprüche 1 bis 9, **dadurch gekennzeichnet, dass** sämtliche Achsen (7), die zusätzlich als Kraftmesselemente ausgebildet sind, an demselben Hebebauteil angeordnet sind und/oder der drehbaren Lagerung desselben Hebebauteils dienen.

11. Flurförderzeug nach einem der Ansprüche 1 bis 10, **dadurch gekennzeichnet, dass**
a. das Gewicht einer auf der Ladefläche befindlichen Last mit der Achse (7) der Hubvorrichtung (2) messbar ist, die zusätzlich zu ihrer Funktion als Lagerbauteil als Kraftmesselement ausgebildet ist, oder dass
b. das Gewicht einer auf der Ladefläche befindlichen Last mit den Kraftmesselement, die an demselben Hebebauteil angeordnet sind, messbar ist.

12. Flurförderzeug nach einem der Ansprüche 1 bis 11, **dadurch gekennzeichnet, dass**
a. die Ladefläche mit der Hubvorrichtung (2) sowohl relativ zu zumindest einem Vorderrad (13), also auch relativ zu zumindest einem Hinterrad (9) anhebbar ist oder dass
b. die Ladefläche mit der Hubvorrichtung (2) parallel sowohl relativ zu zumindest einem Vorderrad (13), also auch relativ zu zumindest einem Hinterrad (9) anhebbar ist.

## Claims

1. Industrial truck which is designed in the form of a pallet truck and/or of a manual stacker truck and/or of a pallet lifter and has a loading surface which can be raised by means of a lifting arrangement, wherein the lifting arrangement (2) has at least two lifting components, which are connected to one another in the manner of a rotary joint by means of a pin (7), **characterized in that**, in addition to performing its function of a bearing component, the pin (7) is designed in the form of a force-measuring element, wherein the industrial truck has the pin (7) in the form of a single force-measuring element, or wherein the industrial truck has a plurality of force-measuring elements which are arranged on the same lifting component and which are the only force-measuring elements of the industrial truck.

2. Industrial truck according to Claim 1, **characterized in that** at least one of the lifting components
a. is part of a parallelogram guide or a triangular guide, and/or
b. is part of a scissors-lifting arrangement or of a parallelogram lifting arrangement and/or of a multiple-joint lifting arrangement.

3. Industrial truck according to Claim 1 or 2, **characterized in that** a threaded spindle (4) is provided, and/or **in that** a threaded spindle (4) is provided, wherein one of the lifting components is designed in the form of a spindle nut (5).

4. Industrial truck according to one of Claims 1 to 3, **characterized in that** at least one of the lifting components is designed in the form of a lifting arm (6), and/or **in that** at least one of the lifting components is designed in the form of a lifting arm (6) and one of the lifting components is designed in the form of a spindle nut (5), wherein the pin connects the lifting arm to the spindle nut (5) in the manner of a rotary joint.

5. Industrial truck according to one of Claims 1 to 4, **characterized in that** the lifting arrangement (2) has a hydraulic cylinder.

6. Industrial truck according to one of Claims 1 to 5, **characterized in that**
a. the pin (7) is designed in the form of a bending-force transducer, and/or **in that**
b. at least one strain gauge (18) is arranged on and/or in the pin (7), and/or **in that**
c. the pin is designed in the form of a capacitively measuring and/or inductively measuring force transducer.

7. Industrial truck according to one of Claims 1 to 6, **characterized in that** the pin (7) has an overload limiter.

8. Industrial truck according to one of Claims 1 to 7, **characterized in that** the pin (7) has at least one cylindrical housing (19), in which is arranged a measuring body (15), provided with measuring sensors, the measuring body being, for example, a bending bar.

9. Industrial truck according to Claim 8, **characterized in that**
a. the cylindrical housing (19) is dimensioned, and arranged, such that it functions as an overload stop for the measuring body (15), and/or **in that**
b. the cylindrical housing (19) is arranged concentrically in relation to the measuring body, and/or **in that**
c. one of the lifting components is arranged on the housing and another of the lifting components is arranged on the measuring body (15) .

10. Industrial truck according to one of Claims 1 to 9, **characterized in that** all the pins (7), which are designed in addition in the form of force-measuring elements, are arranged on the same lifting component and/or serve for bearing the same lifting component in a rotatable manner.

11. Industrial truck according to one of Claims 1 to 10, **characterized in that**
a. the weight of a load located on the loading surface can be measured by the pin (7) of the lifting arrangement (2), said pin, in addition to performing its function of bearing component, being designed in the form of a force-measuring element, or **in that**
b. the weight of a load located on the loading surface can be measured by the force-measuring elements, which are arranged on the same lifting component.

12. Industrial truck according to one of Claims 1 to 11, **characterized in that**
a. the loading surface can be raised by the lifting arrangement (2) both relative to at least one front wheel (13) and relative to at least one rear wheel (9), or **in that**
b. the loading surface can be raised by the lifting arrangement (2) parallel both relative to at least one front wheel (13) and relative to at least one rear wheel (9).

## Revendications

1. Chariot de manutention, qui est réalisé sous la forme d'un chariot élévateur à fourche et/ou d'un chariot élévateur manuel et/ou d'un transpalette et qui possède une surface de chargement, laquelle peut être levée au moyen d'un dispositif de levage, le dispositif de levage (2) possédant au moins deux composants de levage reliés l'un à l'autre de manière articulée en rotation au moyen d'un axe (7), **caractérisé en ce que** l'axe (7), en plus de sa fonction de composant formant palier, est réalisé sous la forme d'un élément de mesure de force, le chariot de manutention possédant l'axe (7) en tant qu'unique élément de mesure de force ou le chariot de manutention possédant plusieurs éléments de mesure de force qui sont disposés au niveau du même composant de levage et qui sont les uniques éléments de mesure de force du chariot de manutention.

2. Chariot de manutention selon la revendication 1, **caractérisé en ce qu'**au moins l'un des composants de levage fait partie
a. d'un guidage à parallélogramme ou d'un guidage à triangle
et/ou
b. d'un dispositif de levage en ciseaux ou d'un dispositif de levage à parallélogramme et/ou d'un dispositif de levage à articulations multiples.

3. Chariot de manutention selon la revendication 1 ou 2, **caractérisé en ce qu'**une tige filetée (4) est présente et/ou **en ce qu'**une tige filetée (4) est présente, l'un des composants de levage étant réalisé sous la forme d'un écrou de broche (5).

4. Chariot de manutention selon l'une des revendications 1 à 3, **caractérisé en ce qu'**au moins l'un des composants de levage est réalisé sous la forme d'un bras de levage (6) et/ou **en ce qu'**au moins l'un des composants de levage est réalisé sous la forme d'un bras de levage (6) et l'un des composants de levage est réalisé sous la forme d'un écrou de broche (5), l'axe reliant le bras de levage de manière articulée en rotation à l'écrou de broche (5).

5. Chariot de manutention selon l'une des revendications 1 à 4, **caractérisé en ce que** le dispositif de levage (2) possède un vérin hydraulique.

6. Chariot de manutention selon l'une des revendications 1 à 5, **caractérisé en ce que**
a. l'axe (7) est réalisé sous la forme d'un capteur de force de flexion et/ou **en ce qu'**au niveau du et/ou
b. dans l'axe (7) est disposée au moins une jauge extensométrique (18) et/ou **en ce que**
c. l'axe est réalisé sous la forme d'un capteur de force à mesure capacitive et/ou à mesure inductive.

7. Chariot de manutention selon l'une des revendications 1 à 6, **caractérisé en ce que** l'axe (7) possède une limitation de surcharge.

8. Chariot de manutention selon l'une des revendications 1 à 7, **caractérisé en ce que** l'axe (7) possède au moins un boîtier cylindrique (19) dans lequel est disposé un corps de mesure (15) équipé de sondes de mesure, par exemple une barre flexible.

9. Chariot de manutention selon la revendication 8, **caractérisé en ce que**
a. le boîtier cylindrique (19) est dimensionné et disposé de telle sorte qu'il fait office de butée de surcharge pour le corps de mesure (15) et/ou **en ce que**
b. le boîtier cylindrique (19) est disposé de manière concentrique par rapport au corps de mesure et/ou **en ce que**
c. l'un des composants de levage est disposé au niveau du boîtier et un autre des composants de levage au niveau du corps de mesure (15).

10. Chariot de manutention selon l'une des revendications 1 à 9, **caractérisé en ce que** tous les axes (7) qui sont en plus réalisés sous la forme d'éléments de mesure de force sont disposés au niveau du même composant de levage et/ou servent à supporter en rotation le même composant de levage.

11. Chariot de manutention selon l'une des revendications 1 à 10, **caractérisé en ce que**
a. le poids d'une charge qui se trouve sur la surface de chargement peut être mesuré avec l'axe (7) du dispositif de levage (2) qui, en plus de sa fonction de composant formant palier, est réalisé sous la forme d'un élément de mesure de force, ou **en ce que**
b. le poids d'une charge qui se trouve sur la surface de chargement peut être mesuré avec les éléments de mesure de force qui sont disposés au niveau du même composant de mesure.

12. Chariot de manutention selon l'une des revendications 1 à 11, **caractérisé en ce que**
a. la surface de chargement peut être levée avec le dispositif de levage (2) à la fois par rapport à au moins une roue avant (13) et aussi par rapport à au moins une roue arrière (9) ou **en ce que**
b. la surface de chargement peut être levée avec le dispositif de levage (2) parallèlement à la fois par rapport à au moins une roue avant (13) et aussi par rapport à au moins une roue arrière (9).
